# EUROPÄISCHE PATENTSCHRIFT

(11) **EP 1 224 096 B1**
(45) Veröffentlichungstag und Bekanntmachung des Hinweises auf die Patenterteilung: **06.05.2004**
(21) Anmeldenummer: 00971353.8
(22) Anmeldetag: 10.10.2000
(51) Int. Cl.: B60N 2/58

(54) **VERFAHREN ZUM HERSTELLEN EINER FLEXIBLEN PROFILLEISTE**
METHOD FOR PRODUCTION OF A FLEXIBLE SHAPED STRIP
PROCEDE DE FABRICATION D'UNE BAGUETTE PROFILEE SOUPLE

(30) Priorität: 30.10.1999 DE 19952416
(43) Veröffentlichungstag der Anmeldung: 24.07.2002
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Patentanwälte Bartels und Partner
(86) Internationale Anmeldenummer: PCT/EP2000/009932
(87) Internationale Veröffentlichungsnummer: WO 2001/032465

(56) Entgegenhaltungen:
- WO-A-97/17871
- DE-A- 19 610 845
- DE-A- 19 743 082
- DE-A- 19 815 838
- DE-C- 19 649 427
- DE-C- 19 808 995
- FR-A- 2 750 690
- GB-A- 303 282
- PATENT ABSTRACTS OF JAPAN vol. 1997, no. 02, 28. Februar 1997 (1997-02-28) & JP 08 280956 A (MITSUBISHI MOTORS CORP), 29. Oktober 1996 (1996-10-29)

## Beschreibung

Die Erfindung betrifft ein Verfahren zum Herstellen einer flexiblen Profilleiste mit den Merkmalen des Oberbegriffes des Patentanspruches 1.

Bei einem Verfahren nach der DE 198 08 995 C1 wird im Polsterteil ein der Form der jeweiligen Profilleiste angepaßter Längskanal eingebracht, der in seiner Längsrichtung Ausnehmungen aufweist, die dem Eingriff von Verhakungselementen an der Profilleiste dienen. Bei dem bekannten Verfahren wird das Schaummaterial derart eingebracht, daß das Polsterteil unmittelbar die Profilleiste umfaßt, so daß eine gute Verhakung der Profilleiste im Polsterteil erreicht ist. Die Haftkräfte der Profilleiste im Polsterteil entstehen im wesentlichen durch die Adhäsionskräfte zwischen der Oberfläche der Profilleiste und dem zugeordneten Schaummaterial. Ferner wird bei der bekannten Lösung vorgeschlagen, zur Erhöhung der Ausreißkräfte für die Profilleiste diese rutschhemmend auszubilden; dies führt jedoch zu relativ weich ausgebildeten Profilleisten und die gewünschte Erhöhung der Ausreißkräfte wird gerade nicht erreicht. Eine weitere Möglichkeit besteht dem Grunde nach darin, die Ausreißkräfte dadurch zu erhöhen, daß man einen härteren Schaum wählt für das Polsterteil. Das Herstellen eines härteren Schaumes läßt sich meistens sehr einfach durch Variation des Polyols und des Härters sowie deren prozentuale Zusammensetzung erreichen. Ein härterer Schaum führt jedoch zu einer Reduzierung des Sitzkomforts, was unerwünscht ist.

Durch die DE-A-198 15 838 ist ein gattungsgemäßes Verfahren bekannt, bei dem ein Verankerungselement in der Art einer Hohlprofilleiste ausgebildet aus zwei unterscheidbaren Bauteilbereichen aufgebaut wird, wobei der erste Bauteilbereich aus starr-elastischem Kunststoff bestehend einen Widerhaken schafft sowie zwei Widerhakenarme und zugeordnete Filmschamiere. Der zweite Bauteilbereich besteht aus gummielastischem Kunststoff, betreffend einen Materialstreifen, mit dem ein Bezugsstoff des Polsterteils mit dem Verankerungselement verbindbar ist sowie zwei Querprofilabschnitte, die sich an die Widerhakenarme anschließen. Das bekannte Verankerungselement wird durch Coextrusion der beiden unterschiedlichen Kunststoffsorten hergestellt, wobei konvexe Wölbungen der beiden Widerhakenarme deren Eindrücken in eine Nut im Polsterschaum eines Polsterteiles erleichtern. Des weiteren ist der für die Widerhakenarme verwendete Kunststoff relativ glatt, so daß die Außenseite der Widerhakenarme eine reibungsarme Oberfläche aufweisen und deshalb mit wenig Widerstand auf der Nutoberfläche entlanggleiten können. Die Querprofilabschnitte weisen hingegen eine konkave Wölbung auf, wobei die Querprofilabschnitte beinahe rechtwinklig auf die Enden der Widerhakenarme treffen, wodurch in den beiden Übergangsbereichen eine Profilkante entsteht.

Der gummielastische Kunststoff, aus dem die Querprofilabschnitte gefertigt sind, der weicher ist als der starr-elastische Kunststoff der Widerhakenarme und des Widerhakenschaftes, weisen eine hohe Haftung gegenüber dem Schaummaterial des Polsterteils auf, so daß die Haltekräfte zwischen Verankerungselement, die im wesentlichen auf Formschluß zwischen diesen beiden Elementen beruhen, durch Reibschluß in diesem Bereich ergänzt werden. Obwohl die bekannte Lösung mit zufriedenstellenden hohen Ausreißkräften aufwartet, baut sie insgesamt geometrisch groß auf und berücksichtigend, daß insbesondere der mittig angeordnete stegartige Widerhakenschaft aus starr-elastischem Kunststoff besteht, ist der Sitzkomfort für einen Sitzbenutzer reduziert.

Ausgehend von diesem Stand der Technik liegt der Erfindung die Aufgabe zugrunde, ein Verfahren zum Herstellen einer Profilleiste zur Verfügung zu stellen, mit dem sich sehr hohe Ausreißkräfte für die Profilleiste im Polsterteil erreichen lassen, ohne daß dies zu einer Reduzierung des Sitzkomforts führt. Eine dahingehende Aufgabe löst ein Verfahren mit den Merkmalen des Patentanspruches 1.

Dadurch, daß gemäß dem kennzeichnenden Teil des Patentanspruches 1 die Rutschhemmung zumindest teilweise außenumfangsseitig auf die Profilleiste aufgebracht wird, und zwar mittels eines Extrusions- oder Beschichtungsverfahrens, ist eine Modifikation der Oberflächenbeschaffenheit für die Profilleiste erreicht, wobei Messungen gezeigt haben, daß die Ausreißkräfte deutlich höher liegen als bei vergleichbaren Verfahren ohne Antirutschbeschichtung. Dabei lassen sich aufgrund der vorgesehenen Rutschhemmung für die Profilleiste harte Kunststoffmaterialien verwenden, wie Highdensity-Polyethylen, und die Rutschhemmung wird auf die Profilleiste mittels eines Extrusions- oder Beschichtungsverfahrens aufgebracht.

Besonders hohe Ausreißkräfte lassen sich erhalten, sofern vorzugsweise bei dem erfindungsgemäßen Verfahren für die Rutschhemmung als Kunststoffmaterial ein solches eingesetzt wird, dessen Shore-A-Härte kleiner als 150, vorzugsweise 30 bis 60, insbesondere 60 ist.

Bei einer besonders bevorzugten Ausführungsform des erfindungsgemäßen Verfahrens wird das rutschhemmende Kunststoffmaterial mittels eines Coextrusionsverfahrens, auf die Kunststoff-Profilleiste aufgebracht. Als besonders günstig hat sich hier der Einsatz von EPDM-Kautschuk erwiesen.

Bei einer anderen bevorzugten Ausführungsform des erfindungsgemäßen Verfahrens wird das rutschhemmende Kunststoffmaterial mittels eines Heißbeschichtungsverfahrens auf die Profilleiste aufgebracht. Als Beschichtung kommen hier insbesondere schwach klebende Klebstoffe auf Basis eines synthetischen Kautschukes in Frage.

Bei einer weiteren bevorzugten Ausführungsform des erfindungsgemäßen Verfahrens wird das rutschhemmende Kunststoffmaterial mittels eines Sprühbeschichtungsverfahrens auf die Profilleiste aufgebracht. Bei dem dahingehenden Verfahren werden durch Besprühen sehr dünne Schichten hintereinander auf die Profilleiste aufgebracht und als Beschichtungsmaterial vorzugsweise ein Einkomponentenklebstoff auf Nitrylkautschukbasis aus organischer Lösung verwendet.

Bei einer weiteren bevorzugten Ausführungsform des erfindungsgemäßen Verfahrens wird das rutschhemmende Kunststoffmaterial mittels eines üblichen Beschichtungs- oder Rakelverfahrens aufgebracht, wobei die aufgebrachte Beschichtung mittels ultravioletten Lichts und/oder mittels einer Elektronenstrahlquelle ausgehärtet wird. Über einen reaktiven Verdünner läßt sich derart die Viskosität des rutschhemmenden Materials einstellen.

Im folgenden wird das erfindungsgemäße Verfahren näher erläutert.

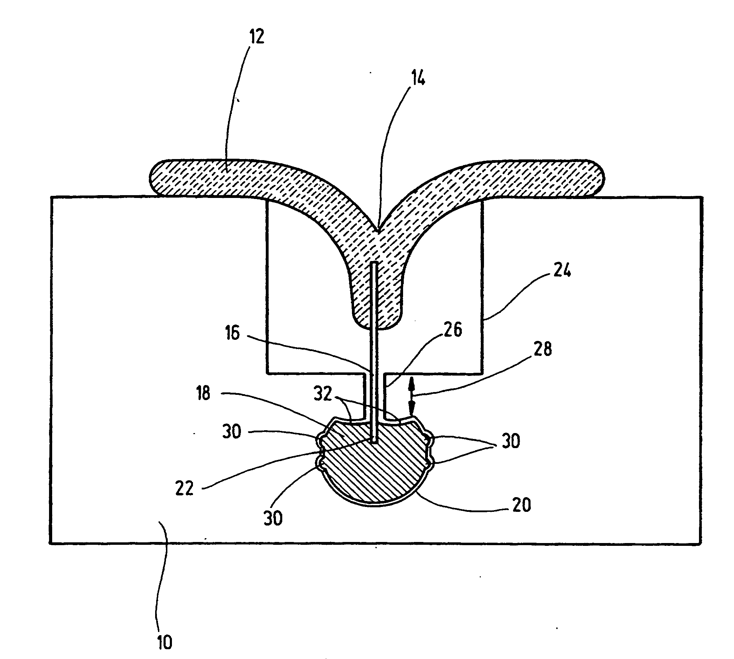

Die einzige Figur zeigt in prinzipieller und nicht maßstäblicher Darstellung einen Ausschnitt aus einem Sitzteil.

Das in der Figur gezeigte Befestigungssystem dient für einen Fahrzeugsitz, wobei zu den Fahrzeugsitzen auch Fluggastsitze gerechnet werden. Der Fahrzeugsitz weist mindestens ein Polsterteil 10, beispielsweise im Bereich der Sitzfläche oder der Rückenlehne, auf. Das Polsterteil 10 besteht aus einem geschäumtem Material, insbesondere aus PU-Schaum. Der dahingehende Schaum ist feinporig ausgebildet. Zum Abdecken des Polsterteils 10 auf seiner zur Umgebung hin weisenden Außenseite dient ein Polsterbezug 12, der in der Figur nur schematisch wiedergegeben ist und beispielsweise aus einem geeigneten Stoff oder Ledermaterial besteht. Der Polsterbezug 12 ist unter Bildung einer Zier- oder Abspannnaht 14 zum Polsterteil 10 hin abgespannt und über eine Nähfahne 16 aus Stoff, Vlies, Metallgewebe, Kunststoffmaterial od.dgl. mit einer als Verankerungsmittel dienenden Profilleiste 18 versehen.

Für die Aufnahme der Profilleiste 18 ist im Schaummaterial des Polsterteils 10 ein Längskanal 20 ausgebildet, der dem Eingriff der Profilleiste 18 dient. Die Profilleiste 18 ist zumindest in Längsrichtung flexibel gehalten aus Kunststoffmaterial gebildet, beispielsweise aus einem weichen PVC des Typs 740012 der Firma Decelith oder aus einem härteren High Density Polyethylen HDPE z.B. des Typs 65428 der Firma Schulmann. Die Profilleiste 18 weist einen Aufnahmeschlitz 22 auf, in den die Nähfahne 16 stegartig eingebracht ist. Der Polsterbezug 12 ist mit dem anderen Ende der Nähfahne 16 durch ein Näh- oder Klebverfahren fest angelenkt. Ansonsten ist die Nähfahne 16, insbesondere in Einsitzrichtung, längselastisch ausgebildet.

Für die Aufnahme der Ziernaht 14 mit Nähfahne 16 ist im Schaummaterial des Polsterteils 10 eine Erweiterung 24 vorgesehen, die nach außen hin ins Freie mündet und nach innen in eine stegartige Profilausnehmung 26 mündet, die dem Durchgriff der Nähfahne 16 dient und die mit ihrem anderen Ende wiederum sich zum Längskanal 20 hin öffnet. Da das Schaummaterial in vorgebbaren Bereichen kompressibel ist, läßt sich die Profilleiste 18 schrittweise von Hand einlegen und auch aus dem zugeordneten Längskanal 20 wieder entfernen, sofern ein Bezugstoffwechsel, eine Reparatur od.dgl. notwendig wird.

Die mögliche Einbautiefe 28, die in der Figur mit einem Doppelpfeil angegeben ist, läßt sich bei modernen Fahrzeugsitzen nicht mehr beliebig variieren, da die Polsterteile 10 nur noch sehr dünn ausgebildet sind, mit der Folge, daß man auch einen sehr dünnen Profilquerschnitt für die Profilleiste 18 wählen muß, um zu vermeiden, daß beim Einsitzen ein unangenehmes Sitzgefühl durch Aufsitzen auf die an sich harte Profilleiste entsteht. Da die Querschnitte für die Profilleiste 18 aber dann schwach dimensioniert sein müssen und nicht mehr beliebig groß gewählt werden können, ist es notwendig, trotz der geringen Profilstärke die Profilleiste 18 sicher im Schaummaterial zu verankern, um ein ungewolltes Ausreißen zu verhindern, was zum Ablösen des Poisterbezuges 12 führen würde. Zur Erhöhung der Ausreißkräfte kann auch vorgesehen sein, am Außenumfang der Profilleiste 18 als weitere Rutschhemmung Verhakungselemente 30 vorzusehen, die dem Eingriff in das Schaummaterial dienen, wobei vorzugsweise hierbei das Schaummaterial über entsprechende rinnenartig Ausnehmungen verfügt. Einzelheiten eines dahingehenden Befestigungssystems lassen sich aus der DE 198 08 995 C1 ersehen.

Um die Ausreißfestigkeit für die massive Profilleiste 18 zu erhöhen, die auch als Hohlkammerprofil ausgebildet sein kann (nicht dargestellt), dienen rutschhemmende Beschichtungen, die auf die Profilleiste 18 aufgetragen werden. Die dahingehende Schichtdicke an rutschhemmendem Material ist derart gering, daß sie der einfacheren Darstellung wegen in der Figur weggelassen wurde. Für die Rutschhemmung haben sich insbesondere Kunststoffmaterialien als günstig erwiesen, deren Shore-A-Härte kleiner als 150, vorzugsweise 30 bis 60, insbesondere 60 ist. Durch das weiche Kunststoffmaterial findet eine verbesserte Anhaftung des Schaummaterials an der Profilleiste 18 mit der Beschichtung statt. Vorzugsweise wird dabei der extrem weiche Kunststoff durch Coextrusion im Bereich des Hinterschnittes 32 aufgebracht, welcher die flügelartigen Verbreiterungen auf der Oberseite des Längskanals 20 untergreift. Als weiterer Kunststofftyp kann beispielsweise EPDM-Kautschuk der Firma Macromas eingesetzt werden. Unter EPDM-Kautschuk versteht man durch Terpolymerisation von Ethylen und größeren Anteilen Propylen sowie einigen Prozent eines dritten Monomeren mit Dien-Struktur hergestellten Kautschuk, in dem das Dien-Monomer die für eine anschließende Schwefel-Vulkanisation benötigten Doppelbindungen bereitstel lt.

Eine weitere Möglichkeit, eine rutschhemmende Beschichtung aufzubringen, ist durch ein Heißschmelzbeschichtungsverfahren gegeben, beispielsweise mit einem schwach klebenden Klebstoff auf Basis eines synthetischen Kautschuks, der unter anderem unter der Markenbezeichnung "Lunatack AS 3916" von der Firma H.B. Fuller zu beziehen ist. Die Verarbeitung erfolgt dabei über einen Düsen- oder Walzenauftrag bei 150 bis 175°C. Die Viskosität bei 175°C liegt bei ca. 14.000 mPas, wobei der Erweichungspunkt bei ca. 117°C liegt. Die Viskosität ist dabei nach der DIN 53018 bestimmt und der Erweichungspunkt anhand der DIN 52011.

Ein anderes Verfahren sieht eine Sprühbeschichtung vor, wobei sehr dünne Schichten auf der Profilleiste 18 entstehen. Vorzugsweise kommt hier ein einkomponentiger Spezialklebstoff auf Nitrit-Kautschuk-Basis aus organischer Lösung zum Einsatz, beispielsweise Typ 1475 der Firma Bostik. Bei dem angesprochenen Spezialklebstoff handelt es sich um einen solchen, der auch zweikomponentig einsetzbar ist. Der Klebstoff beruht auf Nitril-Kautschuk-Basis und als Lösemittel dienen bevorzugt Ketone oder Ester. Die Viskosität liegt bei 3100 mPas.

Bei einem weiteren Beschichtungsverfahren findet eine UV-härtbare Zusammensetzung Verwendung, beispielsweise 85 % Ebecryl 4835 als reaktives Oligomer, versetzt mit 15 % Ebecryl 111 als reaktiven Verdünner zur Einstellung der Viskosität des rutschhemmenden Kunststoffmaterials. Die dahingehenden Produkte lassen sich bei der Firma UCB beziehen.

Mit den angesprochenen Auftragverfahren lassen sich die Profilleisten konventioneller Befestigungssysteme mit deutlich höheren Ausreißkräften versehen, so daß eine sichere Verankerung der Profilleiste 18 im Schaummaterial gewährleistet ist. Trotz der erhöhten Haftkräfte läßt sich die Profilleiste 18 ohne weiteres aus dem Schaummaterial wieder lösen, was bei einer Festverklebung der Profilleiste 18 in das Schaummaterial nicht gegeben wäre. In Abhängigkeit von den gewählten Materialkombinationen läßt sich das dahingehende Befestigungssystem auch umweltfreundlich entsorgen oder recyceln.

Bei einer weiteren bevorzugten Ausführungsform des erfindungsgemäßen Verfahrens wird das rutschhemmende Kunststoffmaterial mittels eines Tauchbeschichtungsverfahrens aufgebracht. Dabei wird als Beschichtungsmaterial vorzugsweise ein Einkomponentenklebstoff auf Nitrylkautschukbasis aus organischer Lösung verwendet. Wahlweise wird während der sogenannten Ablüftezeit das Profil über ein weiteres Tauchbecken zugeführt, das Flocken, bestehend vorwiegend aus PU-Schaum oder aus Fasern, enthält. Dabei gehen die Flocken eine feste Verbindung mit dem Profil ein zur Bildung einer rutschhemmenden Schicht.

## Patentansprüche

1. Verfahren zum Herstellen einer flexiblen Profilleiste (18) aus Kunststoffmaterial für ein Befestigungssystem, das dem Festlegen eines Polsterbezuges (12) an einem Polsterteil (10) dient, das aus einem schäumbaren Material besteht und mit einem Längskanal (20) für den Eingriff der Profilleiste (18) versehen wird, die zur Erhöhung der Ausreißkräfte aus dem Polsterteil (10) zumindest teilweise mit einer Rutschhemmung versehen wird, wobei als Rutschhemmung für die Profilleiste (18) ein weicheres Kunststoffmaterial als der Kunststoff für die Profilleiste (18) eingesetzt wird, **dadurch gekennzeichnet, daß** die Rutschhemmung zumindest teilweise außenumfangsseitig auf die Profilleiste (18) aufgebracht wird, und zwar mittels eines
- Extrusionsverfahrens oder
- Beschichtungsverfahrens.

2. Verfahren nach Anspruch 1, **dadurch gekennzeichnet, daß** für die Rutschhemmung als Kunststoffmaterial ein solches eingesetzt wird, dessen Shore-A-Härte kleiner als 150, vorzugsweise 30 bis 60, insbesondere 60 ist.

3. Verfahren nach Anspruch 1 oder 2, **dadurch gekennzeichnet, daß** als Extrusionsverfahren ein Coextrusionsverfahren eingesetzt wird.

4. Verfahren nach Anspruch 1 oder 2, **dadurch gekennzeichnet, daß** als Beschichtungsverfahren ein Heißbeschichtungsverfahren eingesetzt wird.

5. Verfahren nach Anspruch 1 oder 2, **dadurch gekennzeichnet, daß** als Beschichtungsverfahren ein Sprüh- oder Tauchbeschichtungsverfahren eingesetzt wird.

6. Verfahren nach Anspruch 1 oder 2, **dadurch gekennzeichnet, daß** die aufgebrachte Beschichtung mittels ultravioletten Lichts und/oder mittels einer Elektronenstrahlquelle ausgehärtet wird.

7. Verfahren nach einem der Ansprüche 1 bis 6, **dadurch gekennzeichnet, daß** als rutschhemmendes Kunststoffmaterial ein Kautschukmaterial eingesetzt wird.

8. Verfahren nach einem der Ansprüche 1 bis 7, **dadurch gekennzeichnet, daß** das rutschhemmende Kunststoffmaterial nur in Bereichen des Hinterschnittes (32) zwischen Profilleiste (18) und Schaummaterial des Polsterteiles (10) aufgebracht wird.

9. Verfahren nach einem der Ansprüche 1 bis 8, **dadurch gekennzeichnet, daß** als Profilleiste (18) ein Rund- oder ein T-Profil eingesetzt wird oder eine Profilform in der Art eines Befestigungskeiles oder Befestigungsankers.

10. Verfahren nach einem der Ansprüche 5 und 7 bis 9, **dadurch gekennzeichnet, daß** das rutschhemmende Material bei der Tauchbeschichtung auf die Profilleiste (18) aufgeflockt wird.

## Claims

1. Method of producing a flexible moulding (18) of plastic for a fixing system serving the purpose of holding an upholstery cover (12) to an upholstery part (10) consisting of a foam material and provided with a longitudinal channel (20) for the moulding (18) to engage in, provided at least partly with an anti-slip device, a plastic material softer than the plastic of the moulding (18) being inserted as the anti-slip device, **characterised in that** the anti-slip device is applied at least partly on the outside of the moulding (18), that is by means of an
- extrusion process or
- a coating process.

2. Method according to Claim 1, **characterised in that** the plastic material used for the anti-slip device has a Shore A hardness of less than 150, preferably 30 to 60, especially 60.

3. Method according to Claim 1 or 2, **characterised in that** the extrusion process applied is a coextrusion process.

4. Method according to Claim 1 or 2, **characterised in that** the coating process is a hot coating process.

5. Process according to Claim 1 or 2, **characterised in that** the coating process is a spray coating or a dip coating process.

6. Process according to Claim 1 or 2, **characterised in that** the coating applied is cured by means of ultraviolet light and/or by means of an electron ray source.

7. Process according to one of the Claims 1 to 6, **characterised in that** the anti-slip plastic is a rubber material.

8. Process according to one of the Claims 1 to 7, **characterised in that** the anti-slip plastic is only placed in areas of the undercut (32) between the moulding (18) and the foam of the upholstery part (10).

9. Process according to one of the Claims 1 to 8, **characterised in that** the moulding (18) is a round or T-profile section or a profile shape of the fastening wedge or a fastening anchor type.

10. Process according to one of the Claims 5 and 7 to 9, **characterised in that** the anti-slip material is flocked onto the moulding (18) in a dip coating operation.

## Revendications

1. Procédé de fabrication d'une baguette profilée(18), en matière synthétique, pour un système de fixation servant à fixer une garniture de rembourrage (12) sur une partie rembourrée (10) constituée d'un matériau expansible et qui est pourvue d'un canal longitudinal (20) pour l'engagement de la baguette profilée (18), qui pour augmenter les forces d'arrachement hors de la partie rembourrée (10) est pourvue tout au moins partiellement d'un antidérapant, un matériau synthétique plus mou que la matière synthétique pour la baguette profilée (18) étant utilisé comme antidérapant pour la baguette profilée (18), **caractérisé en ce que** l'antidérapant est appliqué au moins partiellement sur le pourtour de la baguette profilée (18), et cela au moyen d'un
- procédé d' extrusion ou d'un
- procédé de revêtement

2. Procédé selon la revendication 1, **caractérisé en ce qu'**on utilise en tant que matériau synthétique pour l'antidérapant un matériau synthétique dont la dureté Shore A est inférieure à 150, de préférence entre 30 et 60, en particulier 60.

3. Procédé selon les revendications 1 ou 2, **caractérisé en ce qu'**en guise de procédé d'extrusion, on a recours à un procédé de coextrusion.

4. Procédé selon les revendications 1 ou 2, **caractérisé en ce qu'**en guise de procédé de revêtement, on a recours à un procédé de revêtement à chaud.

5. Procédé selon les revendications 1 ou 2, **caractérisé en ce qu'**on utilise en guise de procédé de revêtement, un procédé de revêtement par pulvérisation ou au trempage.

6. Procédé selon les revendications 1 ou 2, **caractérisé en ce que** le revêtement appliqué est durci au moyen d'une lumière ultraviolette et/ou d'une source de faisceau électronique.

7. Procédé selon l'une des revendications 1 à 6, **caractérisé en ce qu'**en guise de matériau synthétique antidérapant on utilise un matériau caoutchouteux.

8. Procédé selon l'une des revendications 1 à 7, **caractérisé en ce que** le matériau synthétique antidérapant n'est appliqué que dans des zones de la section arrière (32) entre la baguette profilée (18) et le matériau expansible de la partie rembourrée (10).

9. Procédé selon l'une des revendications 1 à 8, **caractérisé en ce qu'**en guise de baguette profilée (18) on utilise un profilé rond ou en T ou un profilé d'une forme s'apparentant à celle d'une clavette ou d'une ancre de fixation.

10. Procédé selon l'une des revendications 5 et 7 à 9, **caractérisé en ce que** le matériau antidérapant est floculé sur la baguette profilée (18) au moment du revêtement au trempage.
